(19) Europäisches Patentamt / European Patent Office / Office européen des brevets

(11) **EP 4 807 836 A1**

(12) **EUROPEAN PATENT APPLICATION**
published in accordance with Art. 153(4) EPC

(43) Date of publication:
**16.09.2026 Bulletin 2026/38**

(21) Application number: **23957922.0**

(22) Date of filing: **07.11.2023**

(51) International Patent Classification (IPC):
***H01M 10/0525** (2010.01)* ***H01M 4/70** (2006.01)*
***H01M 4/505** (2010.01)* ***H01M 4/525** (2010.01)*
***H01M 10/058** (2010.01)* ***H01M 10/0567** (2010.01)*
***H01M 10/0569** (2010.01)*

(52) Cooperative Patent Classification (CPC):
**H01M 10/0569; H01M 10/0525; H01M 10/0567;**
H01M 2004/021; H01M 2300/0037; Y02E 60/10

(86) International application number:
**PCT/CN2023/130259**

(87) International publication number:
**WO 2025/097312 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ningde Amperex Technology Limited**
**Ningde, Fujian 352100 (CN)**

(72) Inventors:
- **HE, Jun**
  **Ningde, Fujian 352100 (CN)**
- **GAO, Chao**
  **Ningde, Fujian 352100 (CN)**

(74) Representative: **Kraus & Lederer PartGmbB**
**Thomas-Wimmer-Ring 15**
**80539 München (DE)**

(54) **SECONDARY BATTERY AND ELECTRIC DEVICE**

(57) A secondary battery and an electric apparatus are provided. The secondary battery includes a positive electrode sheet, a negative electrode sheet, and an electrolyte. The positive electrode sheet includes a positive electrode current collector and a positive electrode active material layer. The negative electrode sheet includes a negative electrode current collector and a negative electrode active material layer. The positive electrode current collector integrally extends to form multiple positive electrode tabs. The negative electrode current collector integrally extends to form multiple negative electrode tabs. The positive electrode active material layer includes a positive electrode active material, and $D_v99$ of the positive electrode active material is 27 μm to 33 μm. The negative electrode sheet includes the negative electrode active material layer, the negative electrode active material layer includes a negative electrode active material, and $D_v99$ of the negative electrode active material is 23 μm to 28 μm. The electrolyte includes an organic solvent, a lithium salt, and an additive. The organic solvent includes a chain carboxylate compound. Based on a mass of the electrolyte, a mass percentage of the chain carboxylate compound is 6% to 56%. Through the above settings, the secondary battery has good cycling kinetic performance.

001
W
Up
Down
10
20
30
12
22
FIG. 1



Processed by Luminess, 75001 PARIS (FR)

## Description

### TECHNICAL FIELD

This application relates to the field of electrochemical technology, and in particular, to a secondary battery and an electric apparatus.

### BACKGROUND

Lithium-ion batteries have characteristics such as high specific energy, high operating voltage, low self-discharge rate, small volume, and light weight, and are widely used in various fields such as electric energy storage, portable electronic devices, and electric vehicles.

With the continuous iterative development of consumer lithium-ion batteries in recent years, the market's requirements for their charging speeds and charging rate are increasingly high. Therefore, reducing the impedance of various components of lithium-ion batteries and improving the cycling performance and kinetic performance of lithium-ion batteries to meet the fast charging requirements has become an urgent technical problem to be solved by those skilled in the art.

### SUMMARY

This application is intended to provide a secondary battery to guarantee the kinetic performance and cycling performance of the secondary battery. In addition, an electric apparatus using the secondary battery is provided.

It should be noted that in the summary of this application, an example in which a lithium-ion battery is used as a secondary battery is used to illustrate this application. However, the secondary battery in this application is not limited to the lithium-ion battery, and can also be applied to a secondary battery such as a sodium-ion battery. The specific technical solutions are described below.

According to a first aspect of this application, a secondary battery is provided and includes a positive electrode sheet, a negative electrode sheet, and an electrolyte, where the positive electrode sheet includes a positive electrode current collector and a positive electrode active material layer; the negative electrode sheet includes a negative electrode current collector and a negative electrode active material layer; the positive electrode current collector integrally extends to form multiple positive electrode tabs; the negative electrode current collector integrally extends to form multiple negative electrode tabs; the positive electrode active material layer includes a positive electrode active material, and $D_v99$ of the positive electrode active material is 27 μm to 33 μm, preferably 28 μm to 31 μm; the negative electrode sheet includes the negative electrode active material layer, the negative electrode active material layer includes a negative electrode active material, and $D_v99$ of the negative electrode active material is 23 μm to 28 μm, preferably 24 μm to 26 μm; the electrolyte includes an organic solvent, a lithium salt, and an additive; the organic solvent includes a chain carboxylate compound; and based on a mass of the electrolyte, a mass percentage of the chain carboxylate compound is 6% to 56%, preferably 20% to 40%.

By adopting the above structural design of the positive electrode tabs and the negative electrode tabs, during the cycling process of the secondary battery, multiple current channels may be provided on the positive electrode sheet and the negative electrode sheet, which reduces the internal resistance of the secondary battery, makes the voltage polarization of the secondary battery small under fast charging conditions, reduces the charging temperature rise of the secondary battery, and shortens the charging time of the secondary battery. In addition, by adjusting particle sizes of the positive electrode active material and the negative electrode active material within the above ranges, transmission paths of lithium ions inside the positive electrode active material and the negative electrode active material can be shortened, and the tortuosity of transmission inside the positive electrode sheet and the negative electrode sheet can be reduced, thereby reducing concentration polarization, and allowing the secondary battery to have high kinetic performance. In order to adapt to the high kinetic performance of the secondary battery, high requirements are placed on a transmission speed of lithium ions in the secondary battery. The transmission speed of lithium ions in a conventional electrolyte is relatively slow under a high-kinetic-performance system of the secondary battery, leading to a slow charging speed of the secondary battery, easily causing lithium precipitation during the cycling process, and resulting in degraded cycling performance of the secondary battery. By adjusting the composition and percentage of the electrolyte, the electrolyte has high conductivity and low viscosity, which can accelerate the transmission speed of lithium ions and further reduce the electrochemical polarization and concentration polarization of the battery, thereby improving the cycling performance of the secondary battery. In this application, an electrochemical system is optimized by combining the structural design of the positive electrode tabs and the negative electrode tabs, the particle sizes of the positive electrode active material and the negative electrode active material, and the composition and percentage of the electrolyte, which can guarantee the low temperature rise of the secondary battery on the basis of improving the charging speed of the

secondary battery, thereby meeting the kinetic requirements of fast charging of the secondary battery, and improving the cycling performance of the secondary battery.

In some embodiments of this application, $N_1$ layers of positive electrode sheets are provided between two adjacent positive electrode tabs, and $N_2$ layers of negative electrode sheets are provided between two adjacent negative electrode tabs; where $N_1$ and $N_2$ are each independently selected from 0, 1, 2, or 3. Through the above settings of this application, multiple current channels are provided on the positive electrode sheet and the negative electrode sheet, reducing the internal resistance of the secondary battery, making the voltage polarization of the secondary battery small during fast charging, reducing the charging temperature rise, and shortening the charging time, thereby allowing the secondary battery to have good cycling kinetic performance. It can be understood that adjusting $N_1$ and $N_2$ to 0 allow the positive electrode sheet and the negative electrode sheet to have more current channels, further reducing the internal resistance of the secondary battery, further reducing the charging temperature rise of the fast-charge secondary battery, and further shortening the charging time, thereby further improving the kinetic performance of the fast-charge secondary battery while guaranteeing the cycling performance and mechanical reliability of the fast-charge secondary battery. However, this may reduce the energy density of the battery to a certain extent. Adjusting $N_1$ and $N_2$ to 1, 2, or 3 reduces the number of tabs and increases the internal resistance to a certain extent, but can increase the energy density of the battery.

In some embodiments of this application, the chain carboxylate compound includes at least one of methyl formate, methyl acetate, ethyl formate, ethyl acetate, propyl acetate, ethyl propionate, methyl propionate, n-propyl propionate, isopropyl propionate, n-butyl propionate, isobutyl propionate, n-pentyl propionate, isopentyl propionate, ethyl n-butyrate, n-propyl n-butyrate, propyl isobutyrate, n-pentyl n-butyrate, n-pentyl isobutyrate, n-butyl n-butyrate, isobutyl isobutyrate, or n-pentyl n-valerate. Preferably, the chain carboxylate compound includes at least one of methyl formate, ethyl acetate, propyl acetate, methyl propionate, ethyl propionate, propyl propionate, or ethyl butyrate. By selecting the above types of chain carboxylate compounds, the obtained electrolyte has high conductivity and low viscosity, which is conducive to rapid transmission of lithium ions, thereby reducing the internal resistance of the secondary battery, reducing the charging temperature rise during fast charging of the secondary battery, shortening the charging time, and allowing for good cycling kinetic performance.

In some embodiments of this application, the organic solvent further includes at least one of ethylene carbonate, propylene carbonate, dimethyl carbonate, diethyl carbonate, methyl ethyl carbonate, $\gamma$-butyrolactone, or tetrahydrofuran; and based on the mass of the electrolyte, a mass percentage of the organic solvent is 70% to 80%. Adjusting the type and mass percentage of the organic solvent within the ranges of this application is conducive to improving the stability of the electrolyte, thereby improving the cycling kinetic performance of the secondary battery.

In some embodiments of this application, based on the mass of the electrolyte, a mass percentage of the lithium salt is 10% to 20%. Adjusting the mass percentage of the lithium salt within the above range allows the lithium salt to have high solubility in the electrolyte, allowing the electrolyte to have high conductivity, thereby improving the cycling kinetic performance of the secondary battery.

In some embodiments of this application, the lithium salt includes at least one of lithium hexafluorophosphate, lithium difluorophosphate, lithium tetrafluoroborate, lithium hexafluoroarsenate, lithium perchlorate, lithium bis(fluorosulfonyl)imide, lithium bis(trifluoromethanesulfonyl)imide, lithium bis(oxalato)borate, or lithium difluoro(oxalato)borate. Selecting the above types of lithium salts allows the electrolyte to have high conductivity, thereby improving the cycling kinetic performance of the secondary battery.

In some embodiments of this application, the additive includes at least one of succinonitrile, glutaronitrile, pimelonitrile, 1,2-bis(2-cyanoethoxy)ethane, 1,2-bis(2-cyanoethoxy)propane, or 1,2,3-tris(2-cyanoethoxy)propane; and based on the mass of the electrolyte, a mass percentage of the additive is 2% to 10%. Adjusting the type and mass percentage of the additive within the ranges of this application is conducive to forming a protective electrolyte film (CEI) on a surface of the positive electrode sheet, thereby improving the structural stability of the positive electrode sheet, reducing the side reactions in the electrolyte, and thus improving the high-temperature safety performance of the secondary battery.

In some embodiments of this application, the positive electrode active material includes at least one of lithium nickel cobalt manganese oxide, lithium nickel cobalt aluminum oxide, lithium iron phosphate ($LiFePO_4$), a lithium-rich manganese-based material, lithium cobalt oxide ($LiCoO_2$), lithium manganese oxide, lithium manganese iron phosphate, or lithium titanate. The above types of positive electrode active materials have high surface activity, allowing the secondary battery to have good cycling kinetic performance.

In some embodiments of this application, the positive electrode active material includes a non-metal element, and the non-metal element includes at least one of fluorine, phosphorus, boron, chlorine, silicon, or sulfur. The positive electrode active material including the above types of non-metal elements can further improve the stability of the positive electrode active material. The above elements can be added to the positive electrode active material in the form of elemental substances or compounds containing the above elements by bulk phase doping or coating.

In some embodiments of this application, the negative electrode active material includes at least one of a carbon-based material, a silicon-based material, or a tin-based material, where the carbon-based material includes at least one of natural graphite, artificial graphite, soft carbon, hard carbon, or mesocarbon microbeads; the silicon-based material

includes at least one of a silicon material, a silicon-carbon material, or a silicon-oxygen material; and the tin-based material includes at least one of elemental tin, tin alloy, or tin oxide. The above types of negative electrode active materials have high surface activity, allowing the secondary battery to have good cycling kinetic performance.

In some embodiments of this application, a peak intensity ratio $I_d/I_g$ of a peak d to a peak g in a Raman test of the carbon-based material satisfies: $0.1 \leq I_d/I_g \leq 1.0$. Applying the carbon-based material satisfying the above value of $I_d/I_g$ to the secondary battery is conducive to further improving the cycling kinetic performance of the secondary battery.

According to a second aspect of this application, an electric apparatus is provided and includes the secondary battery according to any one of the foregoing embodiments. Therefore, the electric apparatus has good service performance.

The beneficial effects of this application are as follows:

This application provides a secondary battery and an electric apparatus, where an electrochemical system is optimized by combining the structural design of positive electrode tabs and negative electrode tabs, particle sizes of a positive electrode active material and a negative electrode active material, and the composition and percentage of an electrolyte, so that a good synergistic effect can be achieved between the multi-tab structure, the particle sizes of the positive electrode active material and the negative electrode active material, and the electrolyte. This allows for a fast transmission speed of lithium ions under the high-kinetic-performance system of the secondary battery, guaranteeing the low temperature rise of the secondary battery on the basis of improving the charging speed of the secondary battery, thereby meeting the kinetic requirements of fast charging of the secondary battery, and improving the cycling performance of the secondary battery. The electric apparatus in this application has good service performance.

## BRIEF DESCRIPTION OF DRAWINGS

The accompanying drawings described herein are intended for a further understanding of this application and constitute a part of this application. Illustrative embodiments of this application and descriptions thereof are intended to explain this application, and do not constitute any inappropriate limitation on this application.

FIG. 1 is a schematic structural diagram of an electrode assembly according to an embodiment of this application;
FIG. 2 is a schematic structural diagram of an electrode assembly according to another embodiment of this application;
FIG. 3 is a schematic structural diagram of a positive electrode sheet according to an embodiment of this application;
FIG. 4 is a schematic structural diagram of a negative electrode sheet according to an embodiment of this application;
FIG. 5 is a Raman spectrum of Example 3-3.

Reference signs: electrode assembly 001; positive electrode sheet 10; positive electrode current collector 11; positive electrode active material layer 12; positive electrode tab 13; negative electrode sheet 20; negative electrode current collector 21; negative electrode active material layer 22; negative electrode tab 23; separator 30; positive electrode tab region 111; positive electrode body region 112; negative electrode tab region 211; and negative electrode body region 212.

## DETAILED DESCRIPTION

In order to make the objectives, technical solutions, and advantages of this application clearer, this application will be further described in detail below with reference to the accompanying drawings and some embodiments. Apparently, the described embodiments are only some rather than all of these embodiments of this application. All other embodiments obtained by those skilled in the art based on this application fall within the protection scope of this application.

It should be noted that in the summary of this application, an example in which a lithium-ion battery is used as a secondary battery is used to illustrate this application. However, the secondary battery in this application is not limited to the lithium-ion battery, and can also be applied to a secondary battery such as a sodium-ion battery.

At present, it is required to reduce the internal resistance of a secondary battery system to meet the cycling performance requirements during fast charging of a secondary battery. An embedded single-tab structure used in the existing secondary battery leads to crowded current channels in a positive electrode sheet or a negative electrode sheet, increasing the ohmic impedance of the secondary battery. During fast charging, the secondary battery has a high charging temperature rise, a low charging speed, and poor kinetic performance. In addition, a positive electrode active material and/or a negative electrode active material in a conventional system has a large particle size and low activity, which cannot meet the transmission requirements for fast charging of the secondary battery. In addition, an electrolyte with high conductivity and low viscosity is needed to reduce the electrochemical polarization and concentration polarization of the secondary battery. Based on this, this application provides a secondary battery and an electric apparatus.

According to a first aspect of this application, a secondary battery is provided and includes a positive electrode

sheet, a negative electrode sheet, and an electrolyte. The positive electrode sheet includes a positive electrode current collector and a positive electrode active material layer. The negative electrode sheet includes a negative electrode current collector and a negative electrode active material layer. The positive electrode current collector integrally extends to form multiple positive electrode tabs. The negative electrode current collector integrally extends to form multiple negative electrode tabs. The positive electrode active material layer includes a positive electrode active material, and $D_v99$ of the positive electrode active material is 27 μm to 33 μm, preferably 28 μm to 31 μm. For example, $D_v99$ of the positive electrode active material is 27 μm, 28 μm, 29 μm, 30 μm, 31 μm, 32 μm, 33 μm, or a range defined by any two of these values. The negative electrode sheet includes a negative electrode active material layer, the negative electrode active material layer includes a negative electrode active material, and $D_v99$ of the negative electrode active material is 23 μm to 28 μm, preferably 24 μm to 26 μm. For example, $D_v99$ of the negative electrode active material is 23 μm, 24 μm, 25 μm, 26 μm, 27 μm, 28 μm, or a range defined by any two of these values. The electrolyte includes an organic solvent, a lithium salt, and an additive. The organic solvent includes a chain carboxylate compound. Based on a mass of the electrolyte, a mass percentage of the chain carboxylate compound is 6% to 56%. For example, the mass percentage of the chain carboxylate compound is 6%, 10%, 15%, 20%, 25%, 30%, 35%, 40%, 45%, 50%, 56%, or a range defined by any two of these values. Preferably, based on the mass of the electrolyte, the mass percentage of the chain carboxylate compound is 20% to 40%.

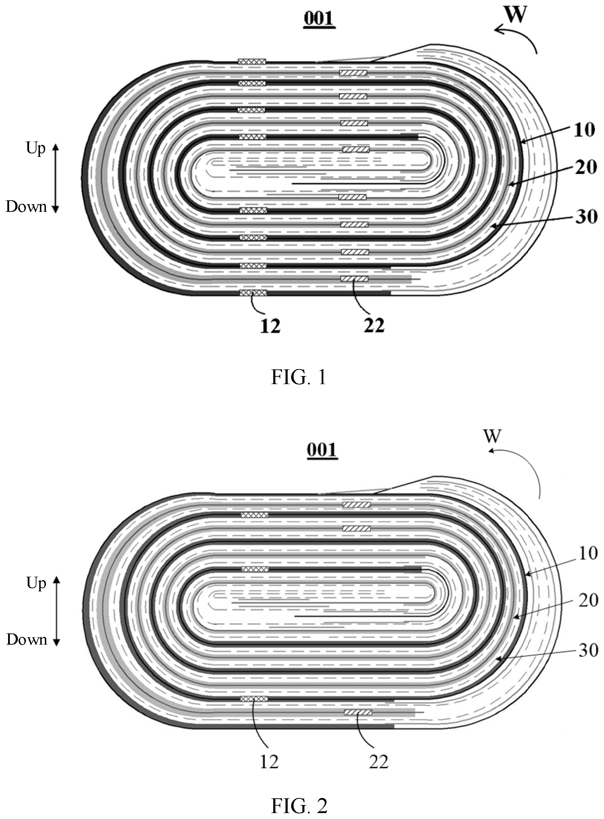

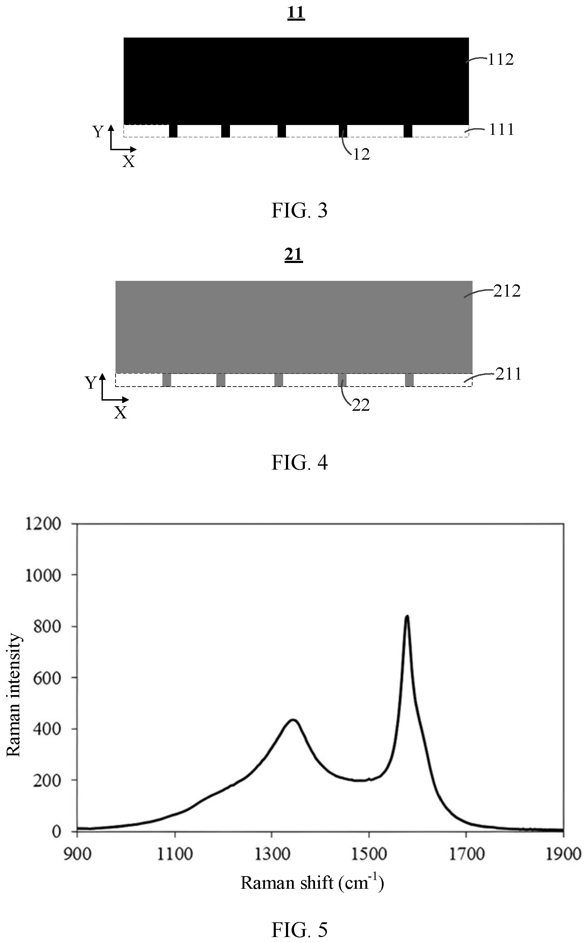

In this application, for ease of understanding, in an unfolded state of the positive electrode sheet, a length direction is defined as X, a width direction is defined as Y, and a thickness direction is defined as Z. It can be understood that length directions, width directions, and thickness directions of the negative electrode sheet and the separator in an unfolded state are the same as those of the positive electrode sheet. After the positive electrode sheet, the separator, and the negative electrode sheet are wound to form an electrode assembly with a wound structure, a winding direction of the electrode assembly is W. As shown in FIG. 1 and FIG. 2, an electrode assembly 001 includes a positive electrode sheet 10, a negative electrode sheet 20, and a separator 30. The separator 30 is provided between the positive electrode sheet 10 and the negative electrode sheet 20. As shown in FIG. 3, the positive electrode sheet 10 includes a positive electrode current collector 11. The positive electrode current collector 11 includes a positive electrode tab region 111 and a positive electrode body region 112. The positive electrode current collector 11 integrally extends to form multiple positive electrode tabs 12. A region of the positive electrode current collector 11 where the positive electrode tabs 12 are provided is the positive electrode tab region 111. A region of the positive electrode current collector 11 other than the positive electrode tab region 111 is the positive electrode body region 112. As shown in FIG. 4, the negative electrode sheet 20 includes a negative electrode current collector 21. The negative electrode current collector 21 includes a negative electrode tab region 211 and a negative electrode body region 212. The negative electrode current collector 21 integrally extends to form multiple negative electrode tabs 22. A region of the negative electrode current collector 21 where the negative electrode tabs 22 are provided is the negative electrode tab region 211. A region of the negative electrode current collector 21 other than the negative electrode tab region 211 is the negative electrode body region 212. In this application, the above "integrally extending" means that the current collector and the tabs are integrally formed. For example, multiple tabs are cut on the current collector by die-cutting or laser. This does not refer to a solution where the tabs are connected to the current collector through manners such as welding. It should be noted that the numbers, shapes, and sizes of the positive electrode tabs and the negative electrode tabs in FIG. 1 to FIG. 4 are only for exemplary illustration, and this application is not limited thereto. In this application, the above "multiple" refers to two or more. In an embodiment of this application, "multiple" refers to 2, and an upper limit of the tabs is theoretically unlimited and is determined according to factors such as the size and capacity of a battery cell. Exemplarily, "multiple" may refer to 2, 3, 4, 5, 6, or 7.

Compared with a conventional single-tab structure, in this application, multiple positive electrode current collector positions are integrally formed in a bare foil region of the positive electrode sheet, and multiple negative electrode current collector positions are formed in a bare foil region of the negative electrode sheet by die-cutting. Through the above settings, multiple current channels are provided on the positive electrode sheet and the negative electrode sheet, reducing the internal resistance of the secondary battery, making the voltage polarization of the secondary battery small during fast charging, reducing the charging temperature rise of the secondary battery, and shortening the charging time, thereby allowing the secondary battery to have high kinetic performance.

When $D_v99$ of the positive electrode active material is less than 27 μm, $D_v99$ of the positive electrode active material is excessively small, indicating that a volume-based particle size of positive electrode active material particles is excessively small, and during the preparation of the positive electrode slurry, the positive electrode active material particles are prone to agglomeration, so the probability of the positive electrode active material being uniformly dispersed in a positive electrode slurry is extremely small, and the distribution of the positive electrode active material particles in the formed positive electrode active material layer is uneven, thus affecting the processing stability of the positive electrode sheet, and causing the problem of uneven coating during the coating process of the positive electrode slurry. In addition, a specific surface area of the positive electrode active material particles is excessively large, leading to increased contact interfaces between the positive electrode active material particles and the electrolyte, and intensifying side reactions; and especially under a high-kinetic-performance electrolyte system for fast charging, the side reactions are relatively intense, thus accelerating the consumption of the electrolyte and the generation of side reaction products, and reducing the cycling

performance of the secondary battery. When $D_v99$ of the positive electrode active material is greater than 33 μm, $D_v99$ of the positive electrode active material is excessively large, transmission paths of lithium ions inside the positive electrode active material particles are excessively long, and the tortuosity of transmission inside the positive electrode sheet is excessively large, leading to excessive concentration polarization inside the secondary battery, thereby increasing the internal resistance of the secondary battery and reducing the cycling kinetic performance of the secondary battery. When $D_v99$ of the negative electrode active material is less than 23 μm, $D_v99$ of the negative electrode active material is excessively small, indicating that a volume-based particle size of negative electrode active material particles is excessively small, and during the preparation of a negative electrode slurry, the negative electrode active material particles are prone to agglomeration, so the probability of the negative electrode active material being uniformly dispersed in the negative electrode slurry is extremely small, and the distribution of the negative electrode active material particles in the formed negative electrode active material layer is uneven, thus affecting the processing stability of the negative electrode sheet, and causing the problem of uneven coating during the coating process of the negative electrode slurry. In addition, a specific surface area of the negative electrode active material particles is excessively large, leading to increased contact interfaces between the negative electrode active material particles and the electrolyte, intensifying side reactions; and especially under the high-kinetic-performance electrolyte system for fast charging, the side reactions are extremely intense, thus accelerating the consumption of the electrolyte and the generation of side reaction products, and reducing the cycling performance of the secondary battery. When $D_v99$ of the negative electrode active material is greater than 28 μm, $D_v99$ of the negative electrode active material is excessively large, transmission paths of lithium ions inside the negative electrode active material particles is excessively long, and the tortuosity of transmission inside the negative electrode sheet is excessively large, leading to excessive concentration polarization inside the secondary battery, thereby increasing the internal resistance of the secondary battery and reducing the cycling kinetic performance of the secondary battery. By adjusting the particle sizes of the positive electrode active material and the negative electrode active material within the ranges of this application, the transmission paths of lithium ions inside the positive electrode active material and the negative electrode active material can be shortened, and the tortuosity of transmission inside the positive electrode sheet and the negative electrode sheet can be reduced, thereby reducing the concentration polarization.

The chain carboxylate has high conductivity and low viscosity, facilitating transmission of lithium ions, and allowing the electrolyte to have high kinetic characteristics. When the mass percentage of the chain carboxylate is less than 6%, the percentage of the chain carboxylate in the electrolyte is too small to fully exert its own characteristics. When the mass percentage of the chain carboxylate is greater than 56%, the percentage of the chain carboxylate in the electrolyte is excessively large, and the percentage of the lithium salt and additive in the electrolyte decreases accordingly. The insufficient amount of the lithium salt affects the charge-discharge performance of the secondary battery, and the insufficient amount of the additive makes it difficult for the additive to exert its own effect, thus affecting the corresponding performance of the secondary battery with the additive. By adjusting the composition in the electrolyte and the mass percentage of the chain carboxylate compound within the ranges of this application, the electrolyte has high conductivity and low viscosity, which can accelerate the transmission speed of lithium ions and further reduce the electrochemical polarization and concentration polarization of the secondary battery.

When $D_v99$ of the positive electrode active material and the negative electrode active material and the composition and percentage of the electrolyte are adjusted within the ranges of this application, the secondary battery has high kinetic performance. A connection method of welding external tabs to a current collector in the prior art is adopted, so that the internal resistance of the secondary battery is large, the charging speed is slow, and the advantages of a high-kinetic-performance secondary battery system is less likely to implement. When the tab design of this application is adopted and $D_v99$ of the positive electrode active material and the negative electrode active material is adjusted within the range of this application, the secondary battery has high kinetic performance. The transmission speed of lithium ions in a conventional electrolyte is relatively slow under a high-kinetic-performance system of the secondary battery, leading to slow charging speed of the secondary battery, easily causing lithium precipitation during the cycling process, and resulting in degraded cycling performance of the secondary battery. When the tab design of this application is adopted and the composition and percentage of the electrolyte are adjusted within the ranges of this application, the capability of the positive electrode sheet and/or negative electrode sheet in intercalation and deintercalation of lithium ions is poor, and under the high-kinetic-performance system, the charging speed of the secondary battery is low, leading to lithium precipitation on the negative electrode sheet during the cycling process, and reducing the cycling performance of the secondary battery. In this application, an electrochemical system is optimized by combining the structural design of the positive electrode tabs and the negative electrode tabs, $D_v99$ of the positive electrode active material and the negative electrode active material, and the composition and percentage of the electrolyte, which can guarantee the low temperature rise of the secondary battery on the basis of improving the charging speed of the secondary battery, thereby meeting the kinetic requirements of fast charging of the secondary battery, and improving the cycling performance of the secondary battery.

In this application, $D_v99$ represents a particle size where the cumulative volume reaches 99% as counted from the small particle size side in the volume-based particle size distribution. The above "particles" in this application may be

particles of the positive electrode active material or particles of the negative electrode active material. Positive electrode active materials and/or negative electrode active materials with different $D_v99$ can be obtained by mechanical crushing, grinding, and other methods.

The secondary battery in this application can be used under fast charging conditions. Specifically, the secondary battery can be used at a charging rate of 5C to 15C. For example, the charging rate of the secondary battery is 5C, 8C, 10C, 12C, 15C, or a range defined by any two of these values.

In some embodiments of this application, $N_1$ layers of positive electrode sheets are provided between two adjacent positive electrode tabs, and $N_2$ layers of negative electrode sheets are provided between two adjacent negative electrode tabs; where $N_1$ and $N_2$ are each independently selected from 0, 1, 2, or 3. As shown in FIG. 1, in a wound electrode assembly, from top to bottom in the figure, no positive electrode sheet 10 is provided between two adjacent positive electrode tabs 12, and no negative electrode sheet 20 is provided between two adjacent negative electrode tabs 22. As shown in FIG. 2, in a wound electrode assembly, from top to bottom in the figure, one layer of positive electrode sheet 10 and two layers of positive electrode sheets 10 are respectively provided between two adjacent positive electrode tabs 12; and no negative electrode sheet 20 and three layers of negative electrode sheets 20 are respectively provided between two adjacent negative electrode tabs 22. Through the above settings of this application, the positive electrode sheet and the negative electrode sheet have sufficient numbers of positive electrode tabs and negative electrode tabs, so that multiple current channels are provided on the positive electrode sheet and the negative electrode sheet, reducing the internal resistance of the secondary battery, making the voltage polarization of the secondary battery small during fast charging, reducing the charging temperature rise, and shortening the charging time, thereby allowing the secondary battery to have good cycling kinetic performance. It can be understood that adjusting $N_1$ and $N_2$ to 0 allows the positive electrode sheet and the negative electrode sheet to have more current channels, further reducing the internal resistance of the secondary battery, further reducing the charging temperature rise of the fast-charge secondary battery, and further shortening the charging time, thereby further improving the kinetic performance of the fast-charge secondary battery while guaranteeing the cycling performance and mechanical reliability of the fast-charge secondary battery. However, this may reduce the energy density of the secondary battery to a certain extent. Adjusting $N_1$ and $N_2$ to 1, 2, or 3 reduces the number of tabs and increases the internal resistance to a certain extent, but can increase the energy density of the battery.

In some embodiments of this application, the chain carboxylate compound includes at least one of methyl formate, methyl acetate, ethyl formate, ethyl acetate, propyl acetate, ethyl propionate, methyl propionate, n-propyl propionate, isopropyl propionate, n-butyl propionate, isobutyl propionate, n-pentyl propionate, isopentyl propionate, ethyl n-butyrate, n-propyl n-butyrate, propyl isobutyrate, n-pentyl n-butyrate, n-pentyl isobutyrate, n-butyl n-butyrate, isobutyl isobutyrate, or n-pentyl n-valerate. Preferably, the chain carboxylate compound includes at least one of methyl formate, ethyl acetate, propyl acetate, methyl propionate, ethyl propionate, propyl propionate, or ethyl butyrate. By selecting the above types of chain carboxylate compounds, the obtained electrolyte has high conductivity and low viscosity, which is conducive to rapid transmission of lithium ions, thereby reducing the electrochemical polarization and concentration polarization of the secondary battery, reducing the charging temperature rise during fast charging of the secondary battery, shortening the charging time, and allowing the secondary battery to have good cycling kinetic performance.

In some embodiments of this application, the organic solvent further includes at least one of ethylene carbonate, propylene carbonate, dimethyl carbonate, diethyl carbonate, methyl ethyl carbonate, $\gamma$-butyrolactone, or tetrahydrofuran; and based on the mass of the electrolyte, a mass percentage of the organic solvent is 70% to 80%. For example, the mass percentage of the organic solvent is 70%, 72%, 74%, 75%, 76%, 78%, 80%, or a range defined by any two of these values. Adjusting the type and mass percentage of the organic solvent within the ranges of this application is conducive to improving the solubility of the additive and the lithium salt, improving the stability of the electrolyte while guaranteeing the kinetic performance of the secondary battery, thereby improving the kinetic performance and cycling performance of the secondary battery. In this application, the mass percentage of the organic solvent can be adjusted by adjusting the amount of the organic solvent added to the electrolyte. A mass percentage of a non-chain carboxylate compound in the organic solvent is calculated by subtracting the mass percentage of the chain carboxylate compound from the mass percentage of the organic solvent.

In some embodiments of this application, based on the mass of the electrolyte, a mass percentage of the lithium salt is 10% to 20%. For example, the mass percentage of the lithium salt is 10%, 12%, 14%, 16%, 18%, 20%, or a range defined by any two of these values. Adjusting the mass percentage of the lithium salt within the above range allows the lithium salt to have high solubility in the electrolyte, allowing the electrolyte to have high conductivity, thereby improving the kinetic performance and cycling performance of the secondary battery. In this application, the mass percentage of the lithium salt can be adjusted by adjusting the amount of the lithium salt added to the electrolyte.

In some embodiments of this application, the lithium salt includes at least one of lithium hexafluorophosphate, lithium difluorophosphate, lithium tetrafluoroborate, lithium hexafluoroarsenate, lithium perchlorate, lithium bis(fluorosulfonyl)imide, lithium bis(trifluoromethanesulfonyl)imide, lithium bis(oxalato)borate, or lithium difluoro(oxalato)borate. Selecting the above types of lithium salts allows the electrolyte to have high conductivity, thereby improving the kinetic performance and cycling performance of the secondary battery.

In some embodiments of this application, the additive includes at least one of succinonitrile, glutaronitrile, pimelonitrile, 1,2-bis(2-cyanoethoxy)ethane, 1,2-bis(2-cyanoethoxy)propane, or 1,2,3-tris(2-cyanoethoxy)propane; and based on the mass of the electrolyte, a mass percentage of the additive is 2% to 10%. For example, the mass percentage of the additive is 2%, 3%, 5%, 6%, 8%, 10%, or a range defined by any two of these values. By adjusting the type and mass percentage of the additive within the ranges of this application, cyano groups in the nitrile compounds can complex with transition metal element ions in the positive electrode sheet to form a CEI film on the surface of the positive electrode sheet, thereby improving the structural stability of the positive electrode sheet and reducing side reactions between the positive electrode active material and the electrolyte, and thus improving the high-temperature safety performance of the secondary battery. In this application, the mass percentage of the additive can be adjusted by adjusting the amount of the additive added to the electrolyte.

In some embodiments of this application, the positive electrode active material includes at least one of lithium nickel cobalt manganese oxide, lithium nickel cobalt aluminum oxide, lithium iron phosphate, a lithium-rich manganese-based material, lithium cobalt oxide, lithium manganese oxide, lithium manganese iron phosphate, or lithium titanate. The chemical formula of the above "lithium-rich manganese-based material" is LiMnO·LiMO, where M may include Ni, Co, or Mn. The above types of positive electrode active materials have high surface activity, so that when the positive electrode active materials are applied to the secondary battery, active sites for intercalation and deintercalation of lithium ions can be increased, reducing the electrochemical polarization of the secondary battery, thereby reducing the internal resistance of the secondary battery, and allowing the secondary battery to have good cycling kinetic performance.

In some embodiments of this application, the positive electrode active material includes a non-metal element, and the non-metal element includes at least one of fluorine, phosphorus, boron, chlorine, silicon, or sulfur. This application has no particular limitation on the percentage of the non-metal element in the positive electrode active material, provided that the objectives of this application can be achieved. For example, based on a mass of the positive electrode active material, a mass percentage of the non-metal element is 0.1% to 10%. For example, the mass percentage of the non-metal element is 0.1%, 1%, 2%, 3%, 4%, 5%, 6%, 7%, 8%, 9%, 10%, or a range defined by any two of these values. The positive electrode active material including the above types of non-metal elements can further improve the stability of the positive electrode active material.

In some embodiments of this application, the negative electrode active material includes at least one of a carbon-based material, a silicon-based material, or a tin-based material, where the carbon-based material includes at least one of natural graphite, artificial graphite, soft carbon, hard carbon, or mesocarbon microbeads. The silicon-based material includes at least one of a silicon material, a silicon-carbon material, or a silicon-oxygen material. The tin-based material includes at least one of elemental tin, tin alloy, or tin oxide. The above types of negative electrode active materials have high surface activity, so that when the negative electrode active materials are applied to the secondary battery, active sites for intercalation and deintercalation of lithium ions can be increased, reducing the electrochemical polarization of the secondary battery, thereby reducing the internal resistance of the secondary battery, and allowing the secondary battery to have good cycling kinetic performance.

In some embodiments of this application, a peak intensity ratio $I_d/I_g$ of a peak d to a peak g in a Raman test of the carbon-based material satisfies: $0.1 \le I_d/I_g \le 1$. For example, the value of $I_d/I_g$ is 0.1, 0.2, 0.3, 0.4, 0.5, 0.6, 0.7, 0.8, 0.9, 1, or a range defined by any two of these values. This indicates that the surface of the carbon-based material contains amorphous carbon, and the presence of amorphous carbon on the surface of the carbon-based material can enhance the electrochemical activity of the carbon-based material. During the cycling process of the secondary battery, the intercalation of lithium ions is smoother, which is conducive to reducing the electrochemical polarization of the secondary battery, thereby reducing the internal resistance inside the secondary battery and improving the cycling kinetic performance of the secondary battery. Applying the carbon-based material satisfying the above value of $I_d/I_g$ to the secondary battery is conducive to further improving the cycling kinetic performance of the secondary battery.

In this application, the peak d is a peak in a Raman spectrum of carbon-based material particles with a shift range of 1300 $cm^{-1}$ to 1400 $cm^{-1}$. The peak g is a peak in the Raman spectrum of the carbon-based material particles with a shift range of 1530 $cm^{-1}$ to 1630 $cm^{-1}$.

This application has no particular limitation on an adjustment method of the value of $I_d/I_g$, provided that the objectives of this application can be achieved. For example, commercially available carbon-based materials with different percentages of amorphous carbon on the surface can be selected and combined with a test method of "Raman (Raman) test" in this application to determine the $I_d/I_g$ of the carbon-based material and select the carbon-based material with the required $I_d/I_g$.

This application has no particular limitation on a preparation method of the carbon-based material, provided that the objectives of this application can be achieved. For example, the preparation method of the carbon-based material may include but is not limited to the following steps: mixing the carbon-based material and amorphous carbon well, then heating to 500°C to 1500°C and holding the temperature for 10 h to 20 h to obtain a carbon-based material having a surface coated with amorphous carbon.

The positive electrode sheet in this application includes a positive electrode current collector and a positive

electrode active material layer provided on at least one surface of the positive electrode current collector. In some embodiments, the positive electrode active material layer is provided on one surface of the positive electrode current collector. In some other embodiments, the positive electrode active material layer is provided on two surfaces of the positive electrode current collector, where the above "surface" may be a partial surface or an entire surface of the positive electrode current collector. This application has no particular limitation on the positive electrode current collector, provided that the objectives of this application can be achieved. For example, the positive electrode current collector may include an aluminum foil, an aluminum alloy foil, or a composite current collector (such as an aluminum-carbon composite current collector). This application has no particular limitation on thicknesses of the positive electrode current collector and the positive electrode active material layer, provided that the objectives of this application can be achieved. For example, the thickness of the positive electrode current collector is 5 μm to 20 μm, preferably 6 μm to 18 μm. The thickness of the positive electrode material layer applied on one surface is 30 μm to 120 μm. In this application, the positive electrode active material layer may further include a conductive agent and a binder. This application has no particular limitation on the type of the binder in the positive electrode active material layer, provided that the objectives of this application can be achieved. For example, the binder may include but is not limited to at least one of polyvinylidene fluoride, a vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, or polyhexafluoropropylene. This application has no particular limitation on the type of the conductive agent in the positive electrode active material layer, provided that the objectives of this application can be achieved. For example, the conductive agent may include but is not limited to at least one of conductive carbon black (Super P), carbon nanotubes (CNTs), carbon fiber, flake graphite, Ketjen black, graphene, a metal material, or a conductive polymer. The above carbon nanotubes may include but are not limited to single-walled carbon nanotubes and/or multi-walled carbon nanotubes. The above carbon fiber may include but is not limited to vapor-grown carbon fiber (VGCF) and/or nano carbon fiber. The above metal material may include but is not limited to metal powder and/or metal fiber. Specifically, the metal may include but is not limited to at least one of copper, nickel, aluminum, or silver. The above conductive polymer may include but is not limited to at least one of polyphenyl derivatives, polyaniline, polythiophene, polyacetylene, or polypyrrole. This application has no particular limitation on a mass ratio of the positive electrode active material, conductive agent, and binder in the positive electrode active material layer, and those skilled in the art can select according to actual needs, provided that the objectives of this application can be achieved.

The negative electrode sheet in this application includes a negative electrode current collector and a negative electrode active material layer provided on at least one surface of the negative electrode current collector. In some embodiments, the negative electrode active material layer is provided on one surface of the negative electrode current collector. In some other embodiments, the negative electrode active material layer is provided on two surfaces of the negative electrode current collector, where the above "surface" may be a partial surface or an entire surface of the negative electrode current collector. This application has no particular limitation on the negative electrode current collector, provided that the objectives of this application can be achieved. For example, the negative electrode current collector may include a copper foil, a copper alloy foil, a nickel foil, a stainless steel foil, a titanium foil, foamed nickel, foamed copper, or a composite current collector (such as a lithium-copper composite current collector, a carbon-copper composite current collector, a nickel-copper composite current collector, or a titanium-copper composite current collector). This application has no particular limitation on the thicknesses of the negative electrode current collector and the negative electrode material layer, provided that the objectives of this application can be achieved. For example, the thickness of the negative electrode current collector is 4 μm to 20 μm, and the thickness of the negative electrode active material layer is 30 μm to 130 μm. Optionally, the negative electrode active material layer may further include a conductive agent and a binder. This application has no particular limitation on the type of the conductive agent in the negative electrode active material layer, provided that the objectives of this application can be achieved. For example, the conductive agent may be of the same type as the conductive agent in the above positive electrode active material layer. This application has no particular limitation on the type of the binder in the negative electrode active material layer, provided that the objectives of this application can be achieved. For example, the binder may be of the same type as the binder in the above positive electrode active material layer. This application has no particular limitation on a mass ratio of the negative electrode active material, conductive agent, and binder in the negative electrode active material layer, provided that the objectives of this application can be achieved.

The separator in the secondary battery in this application is not particularly limited, provided that the objectives of this application can be achieved. The separator substrate includes at least one of polyethylene (PE), polypropylene (PP), polyethylene terephthalate (PET), polyimide (PI), or aramid. For example, polyethylene includes at least one component selected from high-density polyethylene, low-density polyethylene, and ultra-high molecular weight polyethylene. The separator of this application may have a porous structure. This application has no particular limitation on a pore size of the porous structure of the separator, provided that the objectives of this application can be achieved. For example, the pore size may be 0.01 μm to 1 μm. This application has no particular limitation on the thickness of the separator, provided that the objectives of this application can be achieved. For example, the thickness of the separator may be 5 μm to 500 μm.

The secondary battery in this application further includes a packaging bag for accommodating the positive electrode sheet, the negative electrode sheet, the separator, and the electrolyte, as well as other components known in the art in the secondary battery. This application has no limitation on the above other components. This application has no particular limitation on the packaging bag, and the packaging bag may be a packaging bag well-known in the art, provided that the objectives of this application can be achieved.

This application has no particular limitation on the secondary battery, and the secondary battery may include any apparatus in which electrochemical reactions take place. In an embodiment of this application, an electrochemical apparatus may include but is not limited to: a lithium-ion secondary battery (lithium-ion battery), a lithium polymer secondary battery, or a lithium-ion polymer secondary battery.

This application has no particular limitation on a preparation method of the positive electrode sheet, provided that the objectives of this application can be achieved. For example, the preparation method of the positive electrode sheet includes but is not limited to the following steps: (1) preparing a positive electrode slurry; (2) applying the positive electrode slurry on one surface of a positive electrode body region of a positive electrode current collector, drying, and then forming a positive electrode active material layer on one surface of the positive electrode body region of the positive electrode current collector; (3) applying the positive electrode slurry on another surface of the positive electrode body region of the positive electrode current collector, drying, and then forming positive electrode active material layers on two surfaces of the positive electrode body region of the positive electrode current collector respectively; (4) cold pressing and then die-cutting a positive electrode tab region of the positive electrode current collector to make the positive electrode current collector integrally extend to form multiple positive electrode tabs; and (5) slitting to obtain the positive electrode sheet. This application has no particular limitation on the percentage and type of each component in the positive electrode slurry in the above step (1), and those skilled in the art can select according to actual conditions, provided that $D_v99$ of the positive electrode active material added during the preparation of the positive electrode slurry is within the range of this application. This application has no particular limitation on the solid content of the positive electrode slurry in the above step (1), provided that the objectives of this application can be achieved. This application has no particular limitation on the drying time and temperature in the above steps (2) and (3), provided that the objectives of this application can be achieved. This application has no particular limitation on process parameters of cold pressing in the above step (4), provided that the objectives of this application can be achieved.

This application has no particular limitation on a preparation method of the negative electrode sheet, provided that the objectives of this application can be achieved. For example, the preparation method of the negative electrode sheet includes but is not limited to the following steps: (1) preparing a negative electrode slurry; (2) applying the negative electrode slurry on one surface of a negative electrode body region of a negative electrode current collector, drying, and then forming a negative electrode active material layer on one surface of the negative electrode body region of the negative electrode current collector; (3) applying the negative electrode slurry on another surface of the negative electrode body region of the negative electrode current collector, drying, and then forming negative electrode active material layers on two surfaces of the negative electrode body region of the negative electrode current collector respectively; (4) cold pressing and then die-cutting a negative electrode tab region of the negative electrode current collector to make the negative electrode current collector integrally extend to form multiple negative electrode tabs; and (5) slitting to obtain the negative electrode sheet. This application has no particular limitation on the percentage and type of each component in the negative electrode slurry in the above step (1), and those skilled in the art can select according to actual conditions, provided that $D_v99$ of the negative electrode active material added during the preparation of the negative electrode slurry is within the range of this application. This application has no particular limitation on the solid content of the negative electrode slurry in the above step (1), provided that the objectives of this application can be achieved. This application has no particular limitation on the drying time and temperature in the above steps (2) and (3), provided that the objectives of this application can be achieved. This application has no particular limitation on process parameters of cold pressing in the above step (4), provided that the objectives of this application can be achieved.

This application has no particular limitation on a preparation method of the secondary battery, and a preparation method well-known in the art can be selected, provided that the objectives of this application can be achieved. For example, the preparation method of the secondary battery includes but is not limited to the following steps: stacking the separator, the positive electrode sheet, the separator, and the negative electrode sheet in sequence, and performing operations such as winding and folding the resulting stack as needed to obtain an electrode assembly with a wound structure, leading out multiple positive electrode tabs through spot-welding, leading out multiple negative electrode tabs through spot-welding, placing the electrode assembly into a housing, injecting the electrolyte into the housing, and sealing to obtain the secondary battery.

According to a second aspect of this application, an electric apparatus is provided and includes the secondary battery according to any one of the foregoing embodiments. Therefore, the electric apparatus has good service performance.

The electric apparatus of this application is not particularly limited and may be any electric apparatus known in the prior art. For example, the electric apparatus may include but is not limited to a notebook computer, a pen-input computer, a

mobile computer, an e-book player, a portable phone, a portable fax machine, a portable copier, a portable printer, a head-mounted stereo headphone, a video recorder, a liquid crystal television, a portable cleaner, a portable CD player, a mini disc, a transceiver, an electronic notebook, a calculator, a storage card, a portable recorder, a radio, a backup power source, a motor, an automobile, a motorcycle, an electric bicycle, a bicycle, a lighting fixture, a toy, a game console, a clock, an electric tool, a flashlight, a camera, a large household storage battery, and a lithium-ion capacitor.

## Examples

The following describes some embodiments of this application more specifically by using examples and comparative examples. Various tests and evaluations are carried out according to the following methods.

### Test methods and devices:

### Test of $D_v99$:

A laser particle size analyzer was used to test $D_v99$ of the positive electrode active material and the negative electrode active material respectively.

### Raman (Raman) Test:

After discharged at 0.5C to 3.0 V, a lithium-ion battery was disassembled to obtain a negative electrode sheet. Then, the negative electrode sheet was washed with dimethyl carbonate and dried, then an area of 100 $\mu$m $\times$ 100 $\mu$m was selected on a negative electrode active material layer, and negative electrode active material particles in this area were scanned using a laser microscopic confocal Raman spectrometer (Raman, HR Evolution, HORIBA Scientific Instruments Division) to obtain peaks d and peaks g of all negative electrode active material particles in this area range. The data were processed using LabSpec software to obtain peak intensities of a peak d and a peak g of each negative electrode active material particle, which were $I_d$ and $I_g$ respectively. A laser wavelength of the Raman spectrometer was in a range of 532 nm to 785 nm. A value of $I_d/I_g$ was an average of ratios of $I_d$ to $I_g$ of all negative electrode active material particles measured in this range.

### Test of kinetic performance:

The lithium-ion battery in each of examples and comparative examples were subjected to test of kinetic performance at a charging rate of 10C. The specific steps were as follows:
A test temperature was adjusted to a constant temperature of 25°C, and a temperature sensing line of a multi-channel thermometer was placed at the center of a surface of the lithium-ion battery, and the following steps were performed: (1) the lithium-ion battery was charged at a constant current of 10C to 4.2 V; (2) the lithium-ion battery was charged at a constant current of 8C to 4.3 V; (3) the lithium-ion battery was charged at a constant current of 6C to 4.45 V; (4) the lithium-ion battery was charged at a constant voltage of 4.45 V to 0.05C; (5) the lithium-ion battery was left standing for 30 min; (6) the lithium-ion battery was discharged at a constant current of 1C to 3.0 V; and (7) the lithium-ion battery was left standing for 30 min. Then, the test ended.

Charging speed: time from step (1) to step (4).

Charging temperature rise: a difference between a maximum temperature recorded by the temperature sensing line on the surface of the lithium-ion battery during the process from step (1) to step (2) and the room temperature.

The kinetic performance was characterized by the charging speed and charging temperature rise, where a shorter charging time and a smaller charging temperature rise of the lithium-ion battery indicate better the kinetic performance of the lithium-ion battery.

### Test of cycling performance:

The lithium-ion battery in each of examples and comparative examples was subjected to test of cycling performance at a charging rate of 10C. The specific steps were as follows:
A test temperature was adjusted to a constant temperature of 25°C, and the test was started and performed in the following steps: (1) the lithium-ion battery was charged at a constant current of 10C to 4.2 V; (2) the lithium-ion battery was charged at a constant current of 8C to 4.3 V; (3) the lithium-ion battery was charged at a constant current of 6C to 4.45 V; (4) the lithium-ion battery was charged at a constant voltage of 4.45 V to 0.05C; (5) the lithium-ion battery was left standing for 5 min; (6) the lithium-ion battery was discharged at a constant current of 1C to 3.0 V; (7) the lithium-ion battery was left standing for 5 min; and (8) steps (1) to (7) were repeated for 1000 cycles (cls). Then, the test ended.

Capacity retention rate (%) = discharge capacity after 1000 cls / first-cycle discharge capacity × 100%.

**Example 1-1**

<Preparation of positive electrode sheet>

A positive electrode active material lithium cobalt oxide ($LiCoO_2$, $D_v99$ = 30 μm), a positive electrode conductive agent superconducting carbon (Super P), and a positive electrode binder polyvinylidene fluoride (PVDF, Mw = $7 \times 10^6$) were mixed at a mass ratio of 98:1:1, and N-methylpyrrolidone (NMP) was added as a solvent. The resulting mixture was stirred under the action of a vacuum mixer to obtain a positive electrode slurry with a solid content of 75wt% and a uniform system. The positive electrode slurry was uniformly applied on a positive electrode body region of one surface of a positive electrode current collector aluminum foil with a thickness of 11 μm, and dried at 95°C to obtain a positive electrode sheet having one surface coated with a positive electrode active material layer. Then, the above steps were repeated on a positive electrode body region of another surface of the aluminum foil to obtain a positive electrode sheet having two surfaces coated with positive electrode active material layers. Then, cold pressing, cutting, and slitting were performed. Drying was performed at 85°C for 4 h under vacuum after slitting to obtain a positive electrode sheet with a specification of 40 mm × 960 mm for later use. A single-layer thickness of the positive electrode active material layer was 38.5 μm, and a thickness of the positive electrode sheet was 88 μm. The positive electrode tab region of the positive electrode current collector was integrally formed by die-cutting (with a structure as shown in FIG. 3, but not limited to FIG. 3), and the number of positive electrode tabs was 20.

<Preparation of negative electrode sheet>

A negative electrode active material ($D_v99$ = 25 μm), a negative electrode conductive agent Super P, a stabilizer sodium carboxymethyl cellulose (CMC-Na, Mw = $7\times 10^5$), and a negative electrode binder styrene-butadiene rubber (SBR, Mw = $5 \times 10^6$) were mixed at a mass ratio of 96:1.0:1.0:2, and then deionized water was added as a solvent. The resulting mixture was stirred under the action of a vacuum mixer to obtain a negative electrode slurry with a solid content of 51wt% and a uniform system. The negative electrode slurry was uniformly applied on a negative electrode body region of one surface of a negative electrode current collector copper foil with a thickness of 8 μm, and dried at 85°C to obtain a negative electrode sheet having one surface coated with a negative electrode active material layer. Then, the above steps were repeated on a negative electrode body region of another surface of the copper foil to obtain a negative electrode sheet having two surfaces coated with negative electrode active material layers. Then, cold pressing, cutting, and slitting were performed. Drying was performed at 110°C for 4 h under vacuum after slitting to obtain a negative electrode sheet with a specification of 44 mm × 1000 mm for later use. A single-layer thickness of the negative electrode active material layer was 58.5 μm, and a thickness of the negative electrode sheet was 125 μm. A negative electrode tab region of the negative electrode current collector was integrally formed by die-cutting (with a structure as shown in FIG. 4, but not limited to FIG. 4). The number of negative electrode tabs was the same as the number of positive electrode tabs. The type of the negative electrode active material was shown in Table 3.

<Preparation of electrolyte>

In a dry argon atmosphere glove box, a chain carboxylate compound n-propyl propionate and non-chain carboxylate compounds ethylene carbonate and diethyl carbonate were used as an organic solvent, and then a lithium salt lithium hexafluorophosphate ($LiPF_6$) and an additive succinonitrile were added to the organic solvent, dissolved, and mixed well to obtain an electrolyte. Based on a mass of the electrolyte, a mass percentage of n-propyl propionate was 40%, a mass percentage of the organic solvent was 80%, a mass percentage of $LiPF_6$ was 15%, and a mass percentage of succinonitrile was 5%. A mass percentage ratio of ethylene carbonate to diethyl carbonate was 1:1.

<Preparation of separator>

A polypropylene film with a thickness of 5 μm was used as a separator.

<Preparation of lithium-ion battery>

The separator, the positive electrode sheet, the separator, and the negative electrode sheet were stacked in sequence, so that the separator was located between the positive electrode sheet and the negative electrode sheet for isolation. Then, the resulting stack was wound to obtain an electrode assembly. A positive electrode tab was led out as an aluminum tab by spot-welding, and a negative electrode tab was led out as a nickel tab by spot-welding. After winding, each

layer of positive electrode sheet provided with positive electrode tabs in the electrode assembly had one positive electrode tab, and each layer of negative electrode sheet provided with negative electrode tabs had one negative electrode tab. The number $N_1$ of layers of positive electrode sheets provided between two adjacent positive electrode tabs was 0, and the number $N_2$ of layers of negative electrode sheets provided between two adjacent negative electrode tabs was 0 (the settings of positive and negative electrode tabs were as shown in FIG. 1, but not limited to FIG. 1).

The electrode assembly was placed in an aluminum-plastic film housing, and electrolyte injection was performed after drying. Then, processes such as vacuum packaging, standing, formation, capacity testing, degassing, and trimming were performed to obtain a lithium-ion battery.

**Examples 1-2 to 1-13**

These examples were the same as Example 1-1 except that the relevant preparation parameters were adjusted according to Table 1.

**Example 1-14**

<Preparation of positive electrode sheet>

Except that the positive electrode tab region of the positive electrode current collector integrally extended to form 10 positive electrode tabs, the rest was the same as that in Example 1-1.

<Preparation of negative electrode sheet>

Except that the negative electrode tab region of the negative electrode current collector integrally extended to form 10 negative electrode tabs, the rest was the same as that in Example 1-1.

<Preparation of lithium-ion battery>

Except that the number $N_1$ of layers of positive electrode sheets provided between two adjacent positive electrode tabs was 1, and the number $N_2$ of layers of negative electrode sheets provided between two adjacent negative electrode tabs was 1, the rest was the same as that in Example 1-1.

<Preparation of separator> and <preparation of electrolyte> were the same as those in Example 1-1.

**Example 1-15**

<Preparation of positive electrode sheet>

Except that the positive electrode tab region of the positive electrode current collector integrally extended to form 6 positive electrode tabs, the rest was the same as that in Example 1-1.

<Preparation of negative electrode sheet>

Except that the negative electrode tab region of the negative electrode current collector integrally extended to form 6 negative electrode tabs, the rest was the same as that in Example 1-1.

<Preparation of lithium-ion battery>

Except that the number $N_1$ of layers of positive electrode sheets provided between two adjacent positive electrode tabs was 2, and the number $N_2$ of layers of negative electrode sheets provided between two adjacent negative electrode tabs was 2, the rest was the same as that in Example 1-1.

<Preparation of separator> and <preparation of electrolyte> were the same as those in Example 1-1.

**Examples 2-1 to 2-9**

These examples were the same Example 1-1 except that the relevant preparation parameters were adjusted according to Table 2. When the types of the non-chain carboxylate compounds in the organic solvent changed, a ratio of percentages of the non-chain carboxylate compounds remained unchanged. When the percentage of the organic solvent changed, the percentage of the chain carboxylate compound remained unchanged, and the percentage of the non-chain

carboxylate compounds changed accordingly.

**Example 2-10**

This example was the same as Example 1-1 except that no additive was added in <preparation of electrolyte>, and the relevant preparation parameters were adjusted according to Table 2.

**Example 2-11**

This example was the same as Example 1-1 except that the relevant preparation parameters were adjusted according to Table 2.

**Example 3-1**

This example was the same as Example 1-1 except that the relevant preparation parameters were adjusted according to Table 3.

**Examples 3-2 to 3-4**

These examples were the same as Example 1-1 except that artificial graphite with amorphous carbon coated on the surface was selected as the negative electrode active material in <preparation of negative electrode sheet>. A mass ratio of artificial graphite to amorphous carbon was adjusted according to Table 3.

**Examples 3-5 and 3-6**

These examples were the same as Example 1-1 except that the relevant preparation parameters were adjusted according to Table 3.

**Comparative Examples 1 to 3**

These comparative examples were the same as Example 1-1 except that the relevant preparation parameters were adjusted according to Table 1.

**Comparative Example 4**

This comparative example was the same as Example 1-1 except that <preparation of electrolyte> adopted the following preparation steps.

<Preparation of electrolyte>

In a dry argon atmosphere glove box, the non-chain carboxylate compounds ethylene carbonate and diethyl carbonate were used as an organic solvent, and then a lithium salt lithium hexafluorophosphate ($LiPF_6$) and an additive succinonitrile were added to the organic solvent, dissolved, and mixed well to obtain the electrolyte. Based on a mass of the electrolyte, a mass percentage of the organic solvent was 80%, a mass percentage of $LiPF_6$ was 15%, and a mass percentage of succinonitrile was 5%. A mass percentage ratio of ethylene carbonate to diethyl carbonate was 1:1.

**Comparative Examples 5 and 6**

These comparative examples were the same as Example 1-1 except that the relevant preparation parameters were adjusted according to Table 1.

**Comparative Example 7**

This comparative example was the same as Example 1-1 except that <preparation of positive electrode sheet>, <preparation of negative electrode sheet>, <preparation of lithium-ion battery> adopted the following preparation steps.

<Preparation of positive electrode sheet>

A positive electrode active material lithium cobalt oxide ($LiCoO_2$, $D_v99$ = 30 μm), a positive electrode conductive agent superconducting carbon (Super P), and a positive electrode binder polyvinylidene fluoride (PVDF, Mw = 7 × $10^6$) were mixed at a mass ratio of 98:1:1, and N-methylpyrrolidone (NMP) was added as a solvent. The resulting mixture was stirred under the action of a vacuum mixer to obtain a positive electrode slurry with a solid content of 75wt% and a uniform system. The positive electrode slurry was uniformly applied on one surface of a positive electrode current collector aluminum foil with a thickness of 11 μm, and dried at 95°C to obtain a positive electrode sheet having one surface coated with a positive electrode active material layer. Then, the above steps were repeated on another surface of the aluminum foil to obtain a positive electrode sheet having two surfaces coated with positive electrode active material layers. Then, cold pressing, cutting, and slitting were performed. Drying was performed at 85°C for 4 h under vacuum after slitting. Then, one positive electrode tab that was an aluminum tab was welded to the surface of the positive electrode current collector to obtain a positive electrode sheet with a specification of 40 mm × 960 mm for later use. A single-layer thickness of the positive electrode active material layer was 38.5 μm, and a thickness of the positive electrode sheet was 88 μm.

<Preparation of negative electrode sheet>

A negative electrode active material ($D_v99$ = 25 μm), a negative electrode conductive agent Super P, a stabilizer sodium carboxymethyl cellulose (CMC-Na, Mw = 7 × $10^5$), and a negative electrode binder styrene-butadiene rubber (SBR, Mw = 50 × $10^5$) were mixed at a mass ratio of 96:1.0:1.0:2, and then deionized water was added as a solvent. The resulting mixture was stirred under the action of a vacuum mixer to obtain the negative electrode slurry with a solid content of 51wt% and a uniform system. The negative electrode slurry was uniformly applied on one surface of a negative electrode current collector copper foil with a thickness of 8 μm, and dried at 85°C to obtain a negative electrode sheet having one surface coated with a negative electrode active material layer. Then, the above steps were repeated on another surface of the copper foil to obtain a negative electrode sheet having two surfaces coated with negative electrode active material layers. Then, cold pressing, cutting, and slitting were performed. Drying was performed at 110°C for 4 h under vacuum after slitting. Then, one negative electrode tab that was a nickel tab was welded to the surface of the negative electrode current collector to obtain a negative electrode sheet with a specification of 44 mm × 1000 mm for later use. Asingle-layer thickness of the negative electrode active material layer was 58.5 μm, and a thickness of the negative electrode sheet was 125 μm. The type of the negative electrode active material was the same as that in Example 1-1.

<Preparation of lithium-ion battery>

The separator, the positive electrode sheet, the separator, and the negative electrode sheet were stacked in sequence, so that the separator was located between the positive electrode sheet and the negative electrode sheet for isolation. Then, the resulting stack was wound to obtain an electrode assembly. The electrode assembly was placed in an aluminum-plastic film housing, and electrolyte injection was performed after drying. Then, processes such as vacuum packaging, standing, formation, capacity testing, degassing, and trimming were performed to obtain a lithium-ion battery.

**Comparative Examples 8 and 9**

These comparative examples were the same as Example 1-1 except that the relevant preparation parameters were adjusted according to Table 1.

**Comparative Example 10**

This comparative example was the same as Comparative Example 7 except that <preparation of electrolyte> was the same as that in Comparative Example 4.

**Comparative Example 11**

This comparative example was the same as Comparative Example 10 except that $D_v99$ of the positive electrode active material lithium cobalt oxide was 40 μm, and $D_v99$ of the negative electrode active material was 35 μm. The type of the negative electrode active material was the same as that in Example 1-1.

The preparation parameters and performance parameters of examples and comparative examples were shown in Tables 1 to 3.

Table 1

|  | $D_v99$ of positive electrode active material (μm) | $D_v99$ of negative electrode active material (μm) | Percentage of chain carboxylate compound (%) | $N_1$ | $N_2$ | Charging speed at 10C (min) | Charging temperature rise at 10C (°C) | Capacity retention rate after 1000 cls at 25°C (%) |
|---|---|---|---|---|---|---|---|---|
| Example 1-1 | 30 | 25 | 40 | 0 | 0 | 15.3 | 18.8 | 85.6 |
| Example 1-2 | 27 | 25 | 40 | 0 | 0 | 15.1 | 18.5 | 80.6 |
| Example 1-3 | 28 | 25 | 40 | 0 | 0 | 15.2 | 18.6 | 83.4 |
| Example 1-4 | 31 | 25 | 40 | 0 | 0 | 15.4 | 18.8 | 83.2 |
| Example 1-5 | 33 | 25 | 40 | 0 | 0 | 16.0 | 19.7 | 81.4 |
| Example 1-6 | 30 | 23 | 40 | 0 | 0 | 15.2 | 18.4 | 80.6 |
| Example 1-7 | 30 | 24 | 40 | 0 | 0 | 15.3 | 18.8 | 82.4 |
| Example 1-8 | 30 | 26 | 40 | 0 | 0 | 15.4 | 18.8 | 83.8 |
| Example 1-9 | 30 | 28 | 40 | 0 | 0 | 16.2 | 19.6 | 80.2 |
| Example 1-10 | 30 | 25 | 6 | 0 | 0 | 22.1 | 27.9 | 71.4 |
| Example 1-11 | 30 | 25 | 20 | 0 | 0 | 16.5 | 19.9 | 83.2 |
| Example 1-12 | 30 | 25 | 30 | 0 | 0 | 15.7 | 19.8 | 84.1 |
| Example 1-13 | 30 | 25 | 56 | 0 | 0 | 14.2 | 16.9 | 80.9 |
| Example 1-14 | 30 | 25 | 40 | 1 | 1 | 16.7 | 19.6 | 82.1 |
| Example 1-15 | 30 | 25 | 40 | 2 | 2 | 17.8 | 21.2 | 79.4 |
| Comparative Example 1 | 40 | 25 | 40 | 0 | 0 | 19.5 | 25.3 | 57.4 |
| Comparative Example 2 | 30 | 35 | 40 | 0 | 0 | 18.9 | 23.7 | 64.2 |
| Comparative Example 3 | 40 | 35 | 40 | 0 | 0 | 21.4 | 29.6 | 38.5 |
| Comparative Example 4 | 30 | 25 | / | 0 | 0 | 26.2 | 31.4 | 34.2 |
| Comparative Example 5 | 30 | 25 | 2 | 0 | 0 | 23.4 | 29.5 | 40.2 |
| Comparative Example 6 | 30 | 25 | 60 | 0 | 0 | 13.4 | 16.2 | 64.5 |
| Comparative Example 7 | 30 | 25 | 40 | / | / | 18.8 | 22.5 | 42.3 |
| Comparative Example 8 | 20 | 25 | 40 | 0 | 0 | 15.7 | 18.7 | 52.2 |
| Comparative Example 9 | 40 | 18 | 40 | 0 | 0 | 16.2 | 19.2 | 62.1 |
| Comparative Example 10 | 30 | 25 | / | / | / | 29.8 | 33.4 | 36.4 |

(continued)

| | $D_v99$ of positive electrode active material (μm) | $D_v99$ of negative electrode active material (μm) | Percentage of chain carboxylate compound (%) | $N_1$ | $N_2$ | Charging speed at 10C (min) | Charging temperature rise at 10C (°C) | Capacity retention rate after 1000 cls at 25°C (%) |
|---|---|---|---|---|---|---|---|---|
| Comparative Example 11 | 40 | 35 | / | / | / | 30.2 | 34.1 | 33.2 |
| Note: "/" in Table 1 indicates no corresponding parameter. | | | | | | | | |

From Examples 1-1 to 1-15 and Comparative Examples 1 to 11, it can be seen that in the lithium-ion battery in each of the examples of this application, the positive electrode current collector is configured to integrally extend to form multiple positive electrode tabs, and the negative electrode current collector is configured to integrally extend to form multiple negative electrode tabs, so that the lithium-ion battery has a multi-tab structure. In addition, $D_v99$ of the positive electrode active material and $D_v99$ of the negative electrode active material are adjusted within the ranges of this application, the chain carboxylate compound is added to the electrolyte, and the mass percentage of the chain carboxylate compound is adjusted within the range of this application, so that the lithium-ion battery has a shorter charging time (that is, a higher charging speed), a lower charging temperature rise, and a higher capacity retention rate at a charging rate of 10C, indicating that the lithium-ion battery in each of the examples of this application has better cycling kinetic performance under super fast charging conditions. The percentage of the chain carboxylate compound in the electrolyte has a great impact on the kinetic performance of the lithium-ion battery. In Example 1-10, the percentage of the chain carboxylate compound in the electrolyte is low, so that the capacity retention rate of the lithium-ion battery is low, and the high-temperature stability of the lithium-ion battery is relatively high.

In the lithium-ion battery in each of Comparative Examples 1 to 3, $D_v99$ of the positive electrode active material and/or $D_v99$ of the negative electrode active material is not within the range of this application, so that the lithium-ion battery in each of Comparative Examples 1 to 3 has a longer charging time (that is, a lower charging speed), a higher charging temperature rise, and a lower capacity retention rate at a charging rate of 10C, indicating that the lithium-ion battery has poor cycling kinetic performance under fast charging conditions. No chain carboxylate compound is added to the electrolyte in Comparative Example 4, and the mass percentages of the chain carboxylate compounds in Comparative Examples 5 and 6 were not within the range of this application, so that the lithium-ion battery in each of Comparative Examples 4 to 6 has a longer charging time (that is, a lower charging speed), a higher charging temperature rise, and a lower capacity retention rate at a charging rate of 10C, indicating that the lithium-ion battery has poor cycling kinetic performance under fast charging conditions. The lithium-ion battery in Comparative Example 7 has an embedded single-tab structure rather than the multi-tab structure of this application, so that the obtained lithium-ion battery has a longer charging time (that is, a lower charging speed), a higher charging temperature rise, and a lower capacity retention rate at a charging rate of 10C, indicating that the lithium-ion battery has poor cycling kinetic performance under fast charging conditions. In Comparative Examples 8 and 9, $D_v99$ of the positive electrode active material and $D_v99$ of the negative electrode active material are not within the ranges of this application, so that the obtained lithium-ion battery has a longer charging time (that is, a lower charging speed), a higher charging temperature rise, and a lower capacity retention rate at a charging rate of 10C, indicating that the lithium-ion battery has poor cycling kinetic performance under fast charging conditions. The lithium-ion battery in Comparative Example 10 has an embedded single-tab structure rather than the multi-tab structure of this application, and no chain carboxylate compound is added to the electrolyte, so that the obtained lithium-ion battery has a longer charging time (that is, a lower charging speed), a higher charging temperature rise, and a lower capacity retention rate at a charging rate of 10C, indicating that the lithium-ion battery has poor cycling kinetic performance under fast charging conditions. As compared with Comparative Example 4, in Comparative Example 10, the lithium-ion battery has an embedded single-tab structure rather than the multi-tab structure of this application, where the multi-tab structure can reduce the impedance of the lithium-ion battery, improve the charging speed, and reduce the charging temperature rise, making the reaction process of the lithium-ion battery more intense, and resulting in a greater impact on the cycling performance of the lithium-ion battery. Therefore, the capacity retention rate of Comparative Example 4 is lower than that of Comparative Example 10. The lithium-ion battery in Comparative Example 11 has an embedded single-tab structure rather than the multi-tab structure of this application, no chain carboxylate compound is added to the electrolyte, and $D_v99$ of the positive electrode active material and $D_v99$ of the negative electrode active material are not within the ranges of this application, so that the obtained lithium-ion battery has a longer charging time (that is, a lower charging speed), a higher charging temperature rise, and a lower capacity retention rate at a charging rate of 10C, indicating that the lithium-ion battery has poor cycling kinetic performance under fast charging conditions.

The values of $N_1$ and $N_2$ typically affect the cycling kinetic performance of the lithium-ion battery. From Examples 1-1, 1-14, and 1-15, it can be seen that the lithium-ion battery using the values of $N_1$ and $N_2$ within the ranges of this application has a short charging time (that is, a high charging speed), a low charging temperature rise, and a high capacity retention rate at a charging rate of 10C, indicating that the lithium-ion battery has good cycling kinetic performance under fast charging conditions.

Table 2

| | Chain carboxylate compound | Non-chain carboxylate | Percentage of organic solvent (%) | Type of lithium salt | Percentage of lithium salt (%) | Type of additive | Percentage of additive (%) | Charging speed at 10C (min) | Charging temperature rise at 10C (°C) | Capacity retention rate after 1000 cls at 25°C (%) |
|---|---|---|---|---|---|---|---|---|---|---|
| Example 1-1 | N-propyl propionate | Ethylene carbonate + diethyl carbonate | 80 | $LiPF_6$ | 15 | Succinonitrile | 5 | 15.3 | 18.8 | 85.6 |
| Example 2-1 | Ethyl propionate | Ethylene carbonate + diethyl carbonate | 80 | $LiPF_6$ | 15 | Succinonitrile | 5 | 15.4 | 18.7 | 84.3 |
| Example 2-2 | N-pentyl isobutyrate | Ethylene carbonate + diethyl carbonate | 80 | $LiPF_6$ | 15 | Succinonitrile | 5 | 15.4 | 18.8 | 83.2 |
| Example 2-3 | N-propyl propionate | Ethylene carbonate + methyl ethyl carbonate | 80 | $LiPF_6$ | 15 | Succinonitrile | 5 | 15.4 | 18.7 | 83.6 |
| Example 2-4 | N-propyl propionate | $\gamma$-butyrolactone + diethyl carbonate | 80 | $LiPF_6$ | 15 | Succinonitrile | 5 | 15.5 | 18.8 | 82.3 |
| Example 2-5 | N-propyl propionate | Ethylene carbonate + diethyl carbonate | 70 | $LiPF_6$ | 20 | Succinonitrile | 10 | 15.6 | 18.9 | 81.2 |
| Example 2-6 | N-propyl propionate | Ethylene carbonate + diethyl carbonate | 75 | $LiPF_6$ | 18 | Succinonitrile | 7 | 15.1 | 18.6 | 83.1 |
| Example 2-7 | N-propyl propionate | Ethylene carbonate + diethyl carbonate | 63 | $LiPF_6$ | 22 | Succinonitrile | 15 | 17.8 | 20.0 | 75.6 |
| Example 2-8 | N-propyl propionate | Ethylene carbonate + diethyl carbonate | 80 | $LiBF_4$ | 15 | Succinonitrile | 5 | 15.3 | 18.8 | 84.2 |
| Example 2-9 | N-propyl propionate | Ethylene carbonate + diethyl carbonate | 90 | $LiPF_6$ | 8 | Succinonitrile | 2 | 17.5 | 19.8 | 73.1 |

(continued)

| | Chain carboxylate compound | Non-chain carboxylate | Percentage of organic solvent (%) | Type of lithium salt | Percentage of lithium salt (%) | Type of additive | Percentage of additive (%) | Charging speed at 10C (min) | Charging temperature rise at 10C (°C) | Capacity retention rate after 1000 cls at 25°C (%) |
|---|---|---|---|---|---|---|---|---|---|---|
| Example 2-10 | N-propyl propionate | Ethylene carbonate + diethyl carbonate | 80 | $LiPF_6$ | 20 | / | / | 15.7 | 19.2 | 70.5 |
| Example 2-11 | N-propyl propionate | Ethylene carbonate + diethyl carbonate | 80 | $LiPF_6$ | 15 | 1,2-bis(2-cyanoethoxy) ethane | 5 | 15.4 | 18.9 | 81.1 |

Note: "/" in Table 2 indicates no corresponding parameter.

The type of the chain carboxylate compound typically affects the cycling kinetic performance of the lithium-ion battery. From Examples 1-1, 2-1, and 2-2, it can be seen that the lithium-ion battery using the type of the chain carboxylate compound within the range of this application has a short charging time (that is, a high charging speed), a low charging temperature rise, and a high capacity retention rate at a charging rate of 10C, indicating that the lithium-ion battery has good cycling kinetic performance under fast charging conditions.

The type and percentage of the organic solvent typically affect the cycling kinetic performance of the lithium-ion battery. From Example 1-1 and Examples 2-3 to 2-7, it can be seen that the lithium-ion battery using the type and percentage of the organic solvent within the ranges of this application has a short charging time (that is, a high charging speed), a low charging temperature rise, and a high capacity retention rate at a charging rate of 10C, indicating that the lithium-ion battery has good cycling kinetic performance under fast charging conditions.

The type and percentage of the lithium salt typically affect the cycling kinetic performance of the lithium-ion battery. From Examples 1-1 and 2-8, it can be seen that the lithium-ion battery using the type and percentage of the lithium salt within the ranges of this application has a short charging time (that is, a high charging speed), a low charging temperature rise, and a high capacity retention rate at a charging rate of 10C, indicating that the lithium-ion battery has good cycling kinetic performance under fast charging conditions.

The type and percentage of the additive typically affect the cycling kinetic performance of the lithium-ion battery. From Example 1-1 and Examples 2-9 to 2-11, it can be seen that the lithium-ion battery using the type and percentage of the additive within the ranges of this application has a short charging time (that is, a high charging speed), a low charging temperature rise, and a high capacity retention rate at a charging rate of 10C, indicating that the lithium-ion battery has good cycling kinetic performance under fast charging conditions.

**Table 3**

| | Negative electrode active material | $I_d/I_g$ | Positive electrode active material | Charging speed at 10C (min) | Charging temperature rise at 10C (°C) | Capacity retention rate after 1000 cls at 25°C (%) |
|---|---|---|---|---|---|---|
| Example 1-1 | Artificial graphite | 0.8 | Lithium cobalt oxide | 15.0 | 18.3 | 85.6 |
| Example 3-1 | Silicon-carbon material (at a mass ratio of silicon to carbon of 5:95) | 0 | Lithium cobalt oxide | 16.82 | 19.75 | 80.31 |
| Example 3-2 | Artificial graphite + amorphous carbon (at a mass ratio of 98:2) | 0.2 | Lithium cobalt oxide | 15.85 | 19.33 | 81.54 |
| Example 3-3 | Artificial graphite + amorphous carbon (at a mass ratio of 95:5) | 0.5 | Lithium cobalt oxide | 15.53 | 19.08 | 83.31 |
| Example 3-4 | Artificial graphite + amorphous carbon (at a mass ratio of 90:10) | 1 | Lithium cobalt oxide | 15.24 | 18.55 | 82.46 |
| Example 3-5 | Artificial graphite | 0.8 | Lithium iron phosphate | 15.52 | 18.81 | 83.37 |
| Example 3-6 | Artificial graphite | 0.8 | Lithium nickel cobalt manganese oxide (NCM811) | 15.41 | 18.98 | 82.43 |
| Note: "/" in Table 3 indicates no corresponding parameter. | | | | | | |

The type of the negative electrode active material and the value of $I_d/I_g$ of the carbon-based material typically affect the cycling kinetic performance of the secondary battery. From Example 1-1 and Examples 3-1 to 3-4, it can be seen that the lithium-ion battery using the type of the negative electrode active material and the value of $I_d/I_g$ of the carbon-based material within the ranges of this application has a short charging time, a low charging temperature rise, and a high capacity retention rate at a charging rate of 10C, indicating that the lithium-ion battery has good cycling kinetic performance under

fast charging conditions. FIG. 5 is a Raman spectrum of Example 3-3. From FIG. 5, it can be seen that in the Raman spectrum of the negative electrode material with high kinetic performance, the value of $I_d/I_g$ is high, indicating that the negative electrode material has high surface activity.

The type of the positive electrode active material typically affects the cycling kinetic performance and high-temperature stability of the secondary battery. From Examples 1-1, 3-5, and 3-6, it can be seen that the secondary battery using the type of the positive electrode active material and the value of $I_d/I_g$ of the carbon-based material within the ranges of this application has a short charging time, a low charging temperature rise, and a high capacity retention rate at a charging rate of 10C, indicating that the lithium-ion battery has good cycling kinetic performance under fast charging conditions.

The terms "include", "comprise", or any other variant thereof are intended to cover non-exclusive inclusion, such that a process, method, or article that includes a series of elements includes not only those elements but also other elements not explicitly listed, or further includes elements inherent to such process, method, or article.

The various embodiments in this specification are described in a related manner, and identical or similar parts between the various embodiments can be referred to each other, with each embodiment focusing on differences from other embodiments.

The above descriptions are merely preferred embodiments of this application and are not intended to limit this application. Any modification, equivalent substitution, improvement, and the like made within the spirit and principle of this application shall fall within the protection scope of this application.

## Claims

1. A secondary battery, comprising a positive electrode sheet, a negative electrode sheet, and an electrolyte, wherein the positive electrode sheet comprises a positive electrode current collector and a positive electrode active material layer; the negative electrode sheet comprises a negative electrode current collector and a negative electrode active material layer; the positive electrode current collector integrally extends to form multiple positive electrode tabs; the negative electrode current collector integrally extends to form multiple negative electrode tabs; the positive electrode active material layer comprises a positive electrode active material, and $D_v99$ of the positive electrode active material is 27 μm to 33 μm; and the negative electrode active material layer comprises a negative electrode active material, and $D_v99$ of the negative electrode active material is 23 μm to 28 μm; and
the electrolyte comprises an organic solvent, a lithium salt, and an additive, wherein the organic solvent comprises a chain carboxylate compound, and based on a mass of the electrolyte, a mass percentage of the chain carboxylate compound is 6% to 56%.

2. The secondary battery according to claim 1, wherein $N_1$ layers of positive electrode sheets are provided between two adjacent positive electrode tabs, and $N_2$ layers of negative electrode sheets are provided between two adjacent negative electrode tabs; wherein $N_1$ and $N_2$ are each independently selected from 0, 1, 2, or 3.

3. The secondary battery according to claim 1, wherein $D_v99$ of the positive electrode active material is 28 μm to 31 μm, and $D_v99$ of the negative electrode active material is 24 μm to 26 μm.

4. The secondary battery according to claim 1, wherein based on the mass of the electrolyte, the mass percentage of the chain carboxylate compound is 20% to 40%.

5. The secondary battery according to claim 1, wherein the chain carboxylate compound comprises at least one of methyl formate, methyl acetate, ethyl formate, ethyl acetate, propyl acetate, ethyl propionate, methyl propionate, n-propyl propionate, isopropyl propionate, n-butyl propionate, isobutyl propionate, n-pentyl propionate, isopentyl propionate, ethyl n-butyrate, n-propyl n-butyrate, propyl isobutyrate, n-pentyl n-butyrate, n-pentyl isobutyrate, n-butyl n-butyrate, isobutyl isobutyrate, or n-pentyl n-valerate.

6. The secondary battery according to claim 1, wherein the organic solvent further comprises at least one of ethylene carbonate, propylene carbonate, dimethyl carbonate, diethyl carbonate, methyl ethyl carbonate, γ-butyrolactone, or tetrahydrofuran; and based on the mass of the electrolyte, a mass percentage of the organic solvent is 70% to 80%.

7. The secondary battery according to claim 1, wherein based on the mass of the electrolyte, a mass percentage of the lithium salt is 10% to 20%.

8. The secondary battery according to claim 1, wherein the additive comprises at least one of succinonitrile, glutar-

onitrile, pimelonitrile, 1,2-bis(2-cyanoethoxy)ethane, 1,2-bis(2-cyanoethoxy)propane, or 1,2,3-tris(2-cyanoethoxy) propane; and based on the mass of the electrolyte, a mass percentage of the additive is 2% to 10%.

**9.** The secondary battery according to claim 1, wherein at least one of the following features is satisfied:

(1) the chain carboxylate compound comprises at least one of methyl formate, ethyl acetate, propyl acetate, methyl propionate, ethyl propionate, propyl propionate, or ethyl butyrate; or
(2) the lithium salt comprises at least one of lithium hexafluorophosphate, lithium difluorophosphate, lithium tetrafluoroborate, lithium hexafluoroarsenate, lithium perchlorate, lithium bis(fluorosulfonyl)imide, lithium bis(trifluoromethanesulfonyl)imide, lithium bis(oxalato)borate, or lithium difluoro(oxalato)borate.

**10.** The secondary battery according to claim 1, wherein the positive electrode active material comprises at least one of lithium nickel cobalt manganese oxide, lithium nickel cobalt aluminum oxide, lithium iron phosphate, a lithium-rich manganese-based material, lithium cobalt oxide, lithium manganese oxide, lithium manganese iron phosphate, or lithium titanate.

**11.** The secondary battery according to claim 1, wherein the positive electrode active material comprises a non-metal element, and the non-metal element comprises at least one of fluorine, phosphorus, boron, chlorine, silicon, or sulfur.

**12.** The secondary battery according to claim 1, wherein the negative electrode active material comprises at least one of a carbon-based material, a silicon-based material, or a tin-based material; the carbon-based material comprises at least one of natural graphite, artificial graphite, soft carbon, hard carbon, or mesocarbon microbeads; the silicon-based material comprises at least one of a silicon material, a silicon-carbon material, or a silicon-oxygen material; and the tin-based material comprises at least one of elemental tin, tin alloy, or tin oxide.

**13.** The secondary battery according to claim 12, wherein a peak intensity ratio $I_d/I_g$ of a peak d to a peak g in a Raman test of the carbon-based material satisfies: $0.1 \leq I_d/I_g \leq 1$.

**14.** An electric apparatus, comprising the secondary battery according to any one of claims 1 to 13.

001
W
Up
Down
10
20
30
12
22

FIG. 1

001
W
Up
Down
10
20
30
12
22

FIG. 2

11
112
111
Y
X
12

FIG. 3

21

212
211
Y
X
22

FIG. 4

1200
1000
800
600
400
200
0
Raman intensity
900
1100
1300
1500
1700
1900
Raman shift (cm-1)

FIG. 5

**INTERNATIONAL SEARCH REPORT**

International application No. **PCT/CN2023/130259**

**A. CLASSIFICATION OF SUBJECT MATTER**

H01M10/058(2010.01)i； H01M10/0569(2010.01)i； H01M10/0525(2010.01)i； H01M4/70(2006.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, DWPI, ENTXTC, VEN, WPABS, ISI WEB OF SCIENCE, CNKI: 充电速度, 传输速度, 电解液, 激光, 极耳, 集流体, 快充, 粒径, 模切, 微米, 一体, 一体成型, 整体, 整体成型, 羧酸酯, 99, DV, dv99, v99, μm, 粒径, battery, fast-charging, tab

**C. DOCUMENTS CONSIDERED TO BE RELEVANT**

| Category* | Citation of document, with indication, where appropriate, of the relevant passages | Relevant to claim No. |
|---|---|---|
| Y | US 2022328832 A1 (NINGDE AMPEREX TECHNOLOGY LTD.) 13 October 2022 (2022-10-13)<br>description, paragraphs 19-52 | 1-14 |
| Y | WO 2023015437 A1 (NINGDE AMPEREX TECHNOLOGY LTD.) 16 February 2023 (2023-02-16)<br>description, page 3, paragraph 4-page 9, paragraph 3 | 1-14 |
| Y | CN 116759568 A (CONTEMPORARY AMPEREX TECHNOLOGY CO., LTD.) 15 September 2023 (2023-09-15)<br>description, paragraphs 4-71 | 1-14 |
| Y | WO 2022227729 A1 (NINGDE AMPEREX TECHNOLOGY LTD.) 03 November 2022 (2022-11-03)<br>description, page 1, last paragraph-page 3, paragraph 7 | 1-14 |
| Y | WO 2022087902 A1 (NINGDE AMPEREX TECHNOLOGY LTD.) 05 May 2022 (2022-05-05)<br>description, page 4, paragraphs 1-4 | 1-14 |

☑ Further documents are listed in the continuation of Box C. ☑ See patent family annex.

* Special categories of cited documents:

"A" document defining the general state of the art which is not considered to be of particular relevance

"D" document cited by the applicant in the international application

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **05 July 2024** | **10 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2023/130259**

**C. DOCUMENTS CONSIDERED TO BE RELEVANT**

| Category* | Citation of document, with indication, where appropriate, of the relevant passages | Relevant to claim No. |
|---|---|---|
| A | CN 109638212 A (DONGGUAN LIWINON ENERGY TECHNOLOGY CO., LTD.) 16 April 2019 (2019-04-16)<br>entire description | 1-14 |
| A | CN 113826253 A (NINGDE AMPEREX TECHNOLOGY LTD.) 21 December 2021 (2021-12-21)<br>entire description | 1-14 |
| A | WO 2023284383 A1 (NINGDE AMPEREX TECHNOLOGY LTD.) 19 January 2023 (2023-01-19)<br>entire description | 1-14 |
| A | CN 106602133 A (NO.18 RESEARCH INSTITUTE OF CETC) 26 April 2017 (2017-04-26)<br>entire description | 1-14 |

Form PCT/ISA/210 (second sheet) (July 2022)

**INTERNATIONAL SEARCH REPORT**
**Information on patent family members**

International application No.
**PCT/CN2023/130259**

| Patent document cited in search report | Publication date (day/month/year) | Patent family member(s) | Publication date (day/month/year) |
|---|---|---|---|
| US 2022328832 A1 | 13 October 2022 | CN 115148951 A | 13 October 2022 |
| WO 2023015437 A1 | 16 February 2023 | CN 115552657 A | 30 December 2022 |
| | | IN 202427016989 A | 05 April 2024 |
| CN 116759568 A | 15 September 2023 | None | |
| WO 2022227729 A1 | 03 November 2022 | CN 113193163 A | 30 July 2021 |
| | | CN 113193163 B | 12 August 2022 |
| | | US 2022352605 A1 | 03 November 2022 |
| | | EP 4106048 A1 | 21 December 2022 |
| | | EP 4106048 A4 | 14 June 2023 |
| WO 2022087902 A1 | 05 May 2022 | CN 115104205 A | 23 September 2022 |
| CN 109638212 A | 16 April 2019 | None | |
| CN 113826253 A | 21 December 2021 | CN 113826253 B | 12 December 2023 |
| | | WO 2022016378 A1 | 27 January 2022 |
| | | EP 4184700 A1 | 24 May 2023 |
| | | US 2023163414 A1 | 25 May 2023 |
| | | JP 2023534067 W | 07 August 2023 |
| WO 2023284383 A1 | 19 January 2023 | None | |
| CN 106602133 A | 26 April 2017 | None | |

Form PCT/ISA/210 (patent family annex) (July 2022)